(19)

Europäisches Patentamt

European Patent Office

Office européen des brevets

(11) **EP 4 261 580 A1**

(12) **EUROPEAN PATENT APPLICATION**

(43) Date of publication:
**18.10.2023 Bulletin 2023/42**

(21) Application number: **22168330.3**

(22) Date of filing: **14.04.2022**

(51) International Patent Classification (IPC):
**G02B 7/00** (2021.01)        **G02B 7/18** (2021.01)
**G02B 27/00** (2006.01)

(52) Cooperative Patent Classification (CPC):
**G02B 7/185; G02B 7/008; G02B 7/1815;
G02B 26/0825; G02B 27/0025**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Airbus Defence and Space GmbH
82024 Taufkirchen (DE)**

(72) Inventors:
• **KÖHLER, Jess
82024 Taufkirchen (DE)**
• **STUTE, Andreas
82024 Taufkirchen (DE)**

• **LUCARELLI, Stefano
82024 Taufkirchen (DE)**
• **MARENACI, Pierangelo
82024 Taufkirchen (DE)**
• **BIPPUS, Frederic
82024 Taufkirchen (DE)**

(74) Representative: **Frenkel, Matthias Alexander
Wuesthoff & Wuesthoff
Patentanwälte PartG mbB
Schweigerstraße 2
81541 München (DE)**

Remarks:
Amended claims in accordance with Rule 137(2)
EPC.

(54) **APPARATUS AND METHOD FOR ALTERING AN OPTICAL SURFACE OF A MIRROR**

(57)     An apparatus (200) for altering an optical surface (102) of a mirror (100) coupled to a optical instrument (110), wherein said optical surface (102) is deformable dependent on a temperature distribution of the mirror (100), the apparatus (200) comprising: one or more thermal elements (210) coupled to said mirror (100); a power supply (220) coupled to the one or more thermal elements (210) configured to supply power to said one or more thermal elements (210) to deform said optical surface (102) of said mirror (100).

EP 4 261 580 A1

Figure 3

## Description

FIELD OF THE INVENTION

The present invention relates to an apparatus and method for altering an optical surface of a mirror coupled to an optical instrument, wherein said optical surface is deformable dependent on a temperature distribution of the mirror. The apparatus comprises a thermal element, a power supply configured to supply power to the thermal element and to deform said optical surface of the mirror. The method comprises modelling, by a mathematical model, a deformation of said wavefront dependent on temperature and executing, by a processor, an instruction to instruct a power supply to supply power to a thermal element to deform said wavefront of said mirror.

BACKGROUND TO THE INVENTION

In any space optical system, the change between alignment and characterization on-ground and the in-orbit environmental conditions introduces aberrations to the optical beam. Large mirrors are subject to mechanical deformations due to gravity and other mechanical loads, such as the forces of the mounts holding the element in position. In orbit, they suffer temperature variations and thermal gradients due to very different observation scenarios such as deep space, earth or direct sunlight illumination. In order to minimize these deformations, space optical instruments are often designed using insensitive materials with high thermal conductivity and low coefficients of thermal expansion, CTE, (such as SiC or Zerodur) in combination with ultra-stable structures and sophisticated passive or active thermal control of the instrument. For very large reflective instruments, thermo-mechanical deformations of the monolithic primary mirror can reach a magnitude for which severe degradations of the wavefront cannot be avoided anymore. In order to solve the problem, it is necessary to implement an active optics design, where the wavefront aberrations are sensed at the image plane and the opportune compensating corrections are applied in the system by mechanically actuated deformable elements.

Active space optical systems can be of different types. In some cases the large primary mirror is not built in a monolithic manner but made of several smaller active segments, such as in the NASA James Webb Space Telescope, thus implementing the wavefront correction directly at the primary mirror. Some other systems achieve the correction by introducing, in the optical chain, a corrective element such as a smaller deformable mirror in an intermediate pupil position optically conjugated to the primary (e.g. the adaptive mirrors of IOF, Alpao, University Münster and Cilas). This approach is normally less effective and limited by field dependent pupil aberrations. Typically, these solutions are based on mechanical actuators, pose heavy constraints on the optical design and require additional elements in the optical path of the instrument with consequent increased complexity and reduced reliability.

There is therefore a need for a technically simple, robust and cost-efficient way of actively correcting the optical wavefront of a large space optical instrument subject to heavily changing environment.

SUMMARY OF THE INVENTION

The invention is set out in the independent claims. Preferred embodiments of the invention are set out in the dependent claims.

The invention as described by the present specification provides a technically simple, robust and cost-efficient way of actively correcting the optical wavefront of a large space optical instrument subject to heavily changing environment. Thermo-mechanical deformations, instead of being minimized, are employed as an actively-controlled actuation principle, directly on the element which provides the maximum correction efficiency. Due to this approach, high coefficient of thermal expansion, CTE, as well as low thermal conductivity materials become interesting again to be used for these thermal compensating elements. This could be, for example, a metal like aluminum, but additionally or alternatively cheap optical glasses instead of expensive ceramics could be used, as well polishable mirror substrates.

According to a first aspect, we describe an apparatus for altering an optical surface of a mirror coupled to an optical instrument, wherein said optical surface is deformable dependent on a temperature distribution of the mirror. The apparatus comprises one or more thermal elements coupled to said mirror and a power supply coupled to the one or more thermal elements configured to supply power to said one or more thermal elements.

Throughout the present specification, the optical surface may be defined as a surface of the mirror and/or a surface of the mirror which is suitable for reception and/or transmission of optical beams and/or a surface of the mirror which is suitable for the reception and/or transmission of radio frequency beams.

Throughout the present specification, the term "wavefront" may be understood to be a surface, real or imaginary, that is the locus of all adjacent points at which the phase of oscillation of a wave is the same. The wavefront may then be collated at a detector which, in some examples, is coupled to the apparatus, or is integral to the apparatus, described herein after being reflected from the optical surface. This may mean that any aberrations in the optical surface may lead to a deformed wavefront which does not allow for the best performance of the apparatus and/or optical surface and/or mirror and/or optical instrument.

The wavefront is deformable based on a temperature distribution of the mirror and/or optical surface. That is to say that the wavefront may be deformed and/or comprise a different profile dependent on the temperature distribution of the mirror and/or optical surface. A temperature distribution may be defined as a range of temperatures found across a surface of a mirror and/or a substrate of the mirror and/or the optical surface and the distribution of these temperature values. For example, a temperature distribution may comprise a spot point temperature of 10 degrees Celsius at one location and a spot point temperature of 30 degrees Celsius at a second location, with the temperature of the mirror and/or optical surface gradually changing from 10 degrees Celsius to 30 degrees Celsius between these two locations. Additionally or alternatively, the wavefront may be deformable dependent on the environment of the mirror and/or optical surface, the incoming wavefront, and/or the thermal properties of the mirror and/or optical surface, such as temperature, for example thermal distribution and/or thermal conductivity and/or heat capacity.

The thermal element may be a heater, a cooler or any combination of these or any other suitable element which allows for thermal energy to be supplied to the mirror and/or thermal energy to be removed from the mirror. In some examples, the heater and/or the cooler may work in a conductive and/or radiative and/or inductive and/or optical way i.e as a laser. The thermal element is powered by the power supply, wherein the amount of power being supplied to the thermal element may determine the thermal energy being supplied from the thermal element to the mirror. In some examples, the thermal element is at least partially housed in a thermal element unit. In some examples, the thermal element is a thermal actuating/actuator element configured to actively deform a surface of the mirror and/or the optical surface.

The power supply is a preferably electric power supply but may additionally or alternatively use any type of suitable fuel, such as nuclear or hydrogen. In some examples, the power supply is integrated into the thermal element. In some examples, the power supply is at least partially enclosed in a power supply unit.

The one or more thermal elements and the power supply unit may be coupled to one another using wired means, such as, for example, power and/or data cables and/or via wireless means such as, for example, radio signals, Bluetooth or any other suitable wired and/or wireless method. In some examples, the one or more thermal elements and/or the power supply comprises a transmitter and/or receiver used for communication with the other elements of the apparatus and/or external elements related to the optical instrument not mentioned in the present specification and/or Earth and/or a satellite.

In some examples, the apparatus further comprises a processing unit comprising a processor and a memory, wherein the processing unit is coupled to the power supply. The memory comprises a mathematical model configured to model a deformation of said optical surface dependent on temperature and the processor is configured to execute an instruction, from the memory, to instruct the power supply to supply power to the one or more thermal elements to deform said optical surface of said mirror. The processing unit may be coupled to the mirror, coupled to the optical instrument or stored within the optical instrument. The memory may comprise a mathematical model configured to model a deformation of said optical surface. The model may be pre-programmed before the optical instrument is delivered to a user and/or the processing unit may further comprise a receiver configured to receive signals and/or data from the Earth and/or a satellite, which are then used to update the model. Although an optical instrument is mentioned throughout the present specification, the method and apparatus disclosed herein may also be applied to any type of mirror, satellite, antenna or any other suitable device, be it located on the Earth or in space. In some examples, the processing unit is embedded into the power supply and/or at least one of the one or more thermal elements.

In this example, the one or more thermal elements, the power supply unit and the processing unit may be coupled to one another using wired means, such as, for example, power and/or data cables and/or via wireless means such as, for example, radio signals, Bluetooth or any other suitable wired and/or wireless method. In some examples, the one or more thermal elements and/or the power supply and/or the processing unit comprises a transmitter and/or receiver used for communication with the other elements of the apparatus and/or external elements related to the optical instrument not mentioned in the present specification and/or Earth and/or a satellite.

In some examples, the mathematical model is configured to determine a temperature distribution the mirror by taking into account a power value being supplied by the power supply to the one or more thermal elements, a conductive heat transfer of said mirror and a radiative coupling of said mirror to an environment surrounding said mirror. This may allow for the temperature distribution of the mirror for any given heat input, by the one or more thermal elements, and for any set of thermal boundary conditions that specify the radiative and conductive environment the mirror is placed in i.e. the interactions with the optical instrument, the surrounding space, Sun and the Earth to be calculated, should the optical instrument be in space. If the optical instrument is not in space, interactions with the Sun and/or the Earth may not be included in the calculation. In some examples, in a first approximation, the model is linear and thereby the heat input to achieve the temperature distribution is determined by inverting the equation. In some examples, information about the conductive heat transfer and radiative coupling of the mirror is pre-programmed into the model before delivery of the optical instrument. In some examples, the temperature distribution of the mirror may be determined in relation to the current profile and/or deformation of the wavefront and/or the temperature distribution that may lead to at least a portion of the mirror and/or the mirror substrate being returned to its undeformed state and/or its equilibrium temperature and/or lead the wavefront to form a wavefront profile different to that of the undeformed wavefront profile and/or lead the optical surface to form an optical surface profile different to that of the undeformed optical surface profile. In some examples, the equilibrium temperature is the temperature distribution of the mirror that allows for the wavefront to be in its undeformed state. In some examples, the above values may be taken into account via the equation(s) described below. In some examples, the mathematical model may determine the temperature distribution of the mirror by using the above-described parameters and summing up the heat/power flow through each thermal element and coupling the temperature distribution with the thermal expansion of the mirror.

Throughout the present specification, when a reference to at least a portion of the optical surface being returned to its undeformed state and/or equilibrium temperature is disclosed, it is also realized that additionally or alternatively, an optical surface profile different to that of the undeformed optical surface profile could be achieved, for example, the focus of the entire mirror could be altered by this different optical surface profile when compared to the undeformed optical surface profile. In these examples, the equilibrium temperature may refer to the temperature needed to achieve this different optical surface profile. That is to say, the different optical surface profile could be any given optical surface profile that may be useful to the mission of the satellite. The given optical surface may be pre-programmed into the processing unit before delivery of the optical instrument and/or be changed while the optical instrument is in use via receipt of a transmission from the Earth and/or a satellite. Furthermore, the above may also apply to waveform profiles and/or a profile of a substrate of the mirror and/or the mirror.

Additionally, throughout the present specification, the wavefront may be, in some examples, an optical wavefront and/or a radio frequency wavefront.

Throughout the present specification, it should be understood that the terms "thermal energy", "heat input", "heating input" and like terms are interchangeable and may relate to the thermal energy transfer between the mirror and/or optical surface and the thermal element and/or between the mirror and the thermal element to achieve a given optical surface and/or wavefront. Furthermore, the terms "different optical surface (profile)" and "given optical surface (profile)" are interchangeable. Additionally, the term "given optical surface (profile)" may also include the undeformed optical surface (profile).

In some examples, the mathematical model comprises the equation:

$$\Delta x^i = \hat{\alpha}^i \left[ \hat{M}(P - \beta) - T_0 \right]$$

wherein $\Delta x^i$ is a vector comprising the deformation of said optical surface for a number of points on the optical surface, $\hat{\alpha}^i$ is a matrix characterizing a deformation of said mirror for a change in temperature, $\hat{M}$ is a matrix describing thermal properties of said mirror in the environment, P is a power input supplied by the power supply to the one or more thermal elements, $\beta$ is a vector describing thermal properties of said mirror in the environment and $T_0$ is an equilibrium temperature. In the above, "i" may specify the direction of the calculated deformation in a given coordinate basis, such as, for example, the Cartesian coordinate system i={x,y,z}, the cylindrical coordinate system I={r,theta,z} or any other suitable coordinate system. In some examples, $\Delta x_i$ relates to one or more finite element nodes. The equilibrium temperature may be the temperature distribution of the mirror that allows for the wavefront to be in its undeformed state. The values of M and $\beta$ may be determined from a heat equation which comprises summing all changes in power due to thermal conductivity and radiative conductivity as well as the heat capacity of the mirror $\hat{\alpha}^i$ may be derived from the thermal expansion of the mirror under a change of temperature, $\Delta T$. This may mean that $\hat{M}(P-\beta)$ provides the temperature T of a finite element node of the mirror. This may result in the deformation of the mirror being given by $\hat{\alpha}^i (T-T_0)$ = $\hat{\alpha}^i \Delta T$. Here, T may be the temperature distribution required to achieve any given deformation Z, as will be described in more detail below. The above equation may allow for a power input to be calculated that will keep the mirror at the equilibrium temperature for the thermal environment which the mirror is in via the coupling between the power supply and the one or more thermal elements. Moreover, this may mean that as long as the equilibrium temperature is higher than the temperature of the unheated mirror in the environment, any thermal deformation can be compensated by applying a heat input, by the thermal element, to the mirror. This equation may also allow for the deformation of at least a portion of the optical surface due to the heat input caused by the power supply to be calculated. In some examples, the mathematical model may update itself to produce a new model based on the mission that the optical instrument and/or the mirror and/or the optical surface is undertaking. In some examples, the quicker a thermal environment for the optical instrument and/or the mirror and/or the optical surface changes, the higher the frequency of required updates. Furthermore, in some examples, an emissivity and/or an absorptivity of the chosen mirror and/or optical surface material and additionally or alternatively, a heat conductance and/or heat capacity of said material may influence the update frequency. In some examples, if a material which is sensitive to thermal changes is chosen, the update frequency of the model may be increased. The update frequency may be pre-programmed before delivery of the optical instrument and/or may be changed via a transmission form the Earth and/or a satellite received by a receiver coupled to the power supply and/or processing unit.

The above equation may, in some examples, be under the assumption of a linearization of the Stefan-Boltzmann radiation law and assume a thermal steady state. More generally, the thermal equation sum (dQ/dt) = c\*dT/dt may be needed to be solved to determine the temperature T of the mirror for a given P. This T may then be used to calculate the deformations of the mirror compared at T when compared deformations of the mirror at $T_0$.

Throughout the present specification, the equilibrium temperature is the temperature at which the mirror, and therefore the wavefront, is not deformed due to thermal differences, thereby allowing for the most efficient use of the mirror. In some examples, the equilibrium temperature is the temperature at which the mirror, and therefore the wavefront, is deformed to give a profile different to that of the undeformed mirror and/or wavefront profile. Throughout the present specification, a reference to a wavefront deformation may also apply to a mirror deformation and/or optical surface deformation and vice versa.

In some examples, the mathematical model comprises the equation:

$$\chi^2 = [Z(x_1(P), x_2(P)) - x_3(P)]^2$$

wherein $X^2$ is a measure of a square difference of a given target state Z of the deformation in a given coordinate direction, $x_1$, $x_2$ and $x_3$ are distance vectors with regards to a given coordinate system and P is a power input to the one or mere thermal elements from the power supply. That is to say, $x_1(P)$, for example, relates to a deformation in one given axis when a certain power is supplied to the one or more thermal elements. In some examples, Z may be dependent on the deformation along, for example, the coordinate directions $x_1$ and $x_2$ and may be parametrized through Zernike polynomials. In some examples, Z is a vector and may be summed by the square difference in between each finite element node that is being considered. $x_1$, $x_2$ and $x_3$ may be calculated by an equation comprising (1 + the initial value of these coordinates before any deformation takes place), wherein each x value comprises one coordinate value in a three dimension coordinate system. The coordinate system may be a Cartesian coordinate system, a cylindrical coordinate system, or any other suitable type of coordinate system. In some examples, the above equation may only be undertaken with respect to one or two dimensions. That is to say, P is a change in power input needed to deform the mirror, and therefore the wavefront, to the target deformation Z and Z may be understood to be a function of the profile of the wavefront and/or the optical surface in its undeformed state, or alternatively in any given state. This equation may allow for the power input needed to return the wavefront and/or the optical surface to its undeformed state, or indeed any given state, to be calculated either directly by setting $X^2 = 0$ and solving the equation, or by a numerical minimization of $X^2$ with respect to the power input P. Additionally or alternatively, $x_3(T)$ instead of $x_3(P)$, for example, could be calculated, thereby calculating the required temperature distribution to deform the optical surface and/or the wavefront to its undeformed state and/or any given state. The processor may, as a result, instruct the power supply to alter the power it outputs to the one or more thermal elements according to the above equation, thereby allowing for at least a portion of the wavefront and/or optical surface to be returned to its undeformed, or any given, state and/or to the equilibrium temperature. In some examples, the values Z and/or, for example, $x_3(P)$ relate to a plurality of predetermined axes such as, for example, an x-axis and a y-axis.

The use of either, or both, of the above equations may allow, for any thermal environment and given initial deformation, a heating input to be found that best compensates the given deformation through thermal expansion of the mirror and/or optical surface. This may include both deformations caused by the thermal environment and deformations of a mechanical nature e.g. gravity release. This may allow for the mirror to be used at its maximum efficiency due to the optical surface and/or wavefront being relatively undeformed.

In some examples, the value $x_3(P)$, for example, is obtained from the vector $\Delta x^i$. This may allow for the power supply and/or processing unit to calculate the required power needed to be supplied to the thermal element in order to return at least a portion of the wavefront and/or optical surface to its undeformed state and/or any given state and/or to its equilibrium temperature. Additionally or alternatively, $x_i(p)$ and/or $x_2(P)$ could be obtained from $\Delta x^i$.

In some examples, there is a plurality of thermal elements coupled to the power supply and/or the processing unit. The use of a plurality of thermal elements may allow for thermal elements on various areas of the mirror to have differing levels of power be supplied to said thermal elements. This in turn may mean that if areas of the mirror and/or optical surface are at different temperatures and/or deform at different rates, the model, and thereby the power supply and thermal elements, can respond to this, thereby leading to the optical surface and/or wavefront being returned to its undeformed state and/or any given state and/or to its equilibrium temperature across at least a portion of the optical surface. This may in turn improve the efficiency of the mirror. The above may also allow for a greater control of the deformation of the wavefront and/or optical surface due to the aforementioned differing temperatures on different areas of the mirror and/or optical surface.

In some examples, the plurality of thermal elements are distributed evenly on said mirror. In some examples, the plurality of thermal elements may be arranged in a checkerboard-type pattern, a pattern of concentric circles beginning from a center point of the mirror, or any other suitable pattern of distribution of thermal elements. In some examples, the greater the number of thermal elements, the greater the control of the temperature distribution of the mirror and optical surface, and therefore the better the control of deformation of the mirror/wavefront to any given state. This may allow for a greater control of the deformation of the wavefront and/or optical surface due to areas of the mirror and/or optical surface being at different temperatures and/or deforming at different rates.

In the above, if different areas of the mirror and/or optical surface are at different temperatures, the optical surface and/or wavefront may deform at different rates across the mirror. This can be compensated for by the plurality of thermal elements as each thermal element can be supplied with an appropriate amount of power, by the power supply, to return at least a portion of the wavefront and/or optical surface to its undeformed state and/or any given state and/or to its equilibrium temperature in the respective area which is heated and/or cooled by the thermal element. In some examples, each thermal element is coupled to its own respective power supply. In some examples, a plurality of thermal elements are coupled to a single power supply. In some examples, a plurality of power supplies are coupled to a single processing unit. In some examples, each power supply is coupled to its own respective processing unit. In this example, each processing unit is coupled to a main controller configured to control the output of processing units. In some examples, each processing unit has its own controller configured to control the output of said processing unit and/or receive instructions from external elements related to the optical instrument not mentioned in the present specification.

In some examples, the mathematical model comprises a Zernike polynomial to model the deformation of said optical surface at a discrete point of said optical surface. A Zernike polynomial is known to the skilled person and is not described in further detail here. The Zernike polynomial may allow for one or more Zernike coefficients to be calculated at one or more respective points of the mirror and/or optical surface and/or wavefront. The one or more Zernike coefficients may be measurable by one or more sensors coupled to the mirror and/or optical surface, wherein the one or more sensors transmit the one or more Zernike coefficients to the processing unit and/or power supply. The one or more Zernike coefficients may characterize a deformation of the wavefront and/or optical surface in one or more axes, thereby allowing the model to calculate the power input needed to be supplied to the thermal element in order to return at least a portion of the wavefront and/or optical surface to its undeformed state and/or any given state and/or to the equilibrium temperature. Additionally or alternatively, the one or more Zernike coefficients may be used to cross-correlate the actual measured deformation with the estimated deformation in the model, thereby allowing for a user on Earth or in a satellite to see if the model is functioning properly and, if necessary, allow for the user to update the model. In some examples, the processing unit and/or the power supply comprises a machine learning module configured to correlate the actual measured deformation with the estimated deformation in the model and update the model automatically. In some examples, the Zernike polynomial may depend on the profile of the wavefront and/or mirror and/or the mechanical structure of the mirror and/or the optical surface. In some examples, low orders of Zernike polynomials and/or coefficients are used to reduce the memory and/or processing power needed to be used by the processing unit.

In some examples, the apparatus further comprises a temperature sensor coupled to the mirror. This temperature sensor may then, in turn, be coupled to the processing unit and/or power supply. The temperature sensor may be used in a similar manner to the sensor described above in relation to the Zernike polynomial, in that the actual temperature of the mirror and/or optical surface could be measured and then used to allow the model to calculate the power input needed to be supplied to the thermal element in order to return at least a portion of the wavefront and/or optical surface to its undeformed state and/or any given state and/or to the equilibrium temperature. Additionally or alternatively, the one or more inputs from the temperature sensor may be used to cross-correlate the actual measured temperature with the estimated temperature of the mirror and/or optical surface in the model, thereby allowing for a user on Earth or in a satellite to see if the model is functioning properly and, if necessary, allow for the user to update the model. This information may also be used in the machine learning unit described above in order to update the model. In some examples, there is a plurality of temperature sensors coupled to the mirror and/or optical surface.

In some examples, the mathematical model is configured to maintain a temperature of said optical surface and/or mirror. In some examples, the mathematical model is configured to maintain a temperature distribution of the mirror that may reproduce at least a portion of the wavefront and/or optical surface that is relatively undeformed. This portion may be maintained in this relatively undeformed state even under external influences such as, for example, heat or mechanical deformations, thereby leading to a more efficient use of the mirror. In some examples, the mathematical model may be configured to maintain a temperature for reproducing any given wavefront and/or optical surface. In some examples, the at least the portion of the mirror is maintained in any given state. In some examples, the temperature distribution may be the same as the equilibrium temperature.

Throughout the present specification, when a first element is described as being coupled to a second element, the first element may additionally or alternatively be coupled to any other suitable third element and/or embedded in the second and/or third element.

In some examples, the deforming of the optical surface of the mirror, by the one or more thermal elements, is configured to reduce a wavefront error of a wavefront received by the mirror. This may improve the performance of the mirror and/or optical surface and/or optical instrument as the wavefront error is reduced.

According to a second aspect, we describe a use of the apparatus in a space-borne optical instrument and/or a use of the mirror in a space-borne optical instrument. The space-borne optical instrument may be any suitable optical instrument, such as, for example, a telescope or a radar system, suitable for Earth observation missions. In some examples, the space-borne optical instrument may be additionally or alternatively suitable for observing other celestial bodies such as, for example, the Sun, the Moon, other planets or planetary satellites and other man-made structures in space. Throughout the present specification, the term "optical instrument" may be equivalent to the term "optical system". In some examples, the optical instrument is a part of the optical system, wherein the optical system comprises a plurality of optical instruments and/or other hardware, not described herein, suitable for constructing an optical system.

According to a third aspect, we describe a mirror coupled to a satellite comprising the apparatus described above, the mirror further comprising at least two regions, wherein a first region comprises a first thermal conductivity and a second region comprises a second thermal conductivity, wherein the first and second thermal conductivities are not equal. For each region of the mirror, the heat input applied to the respective region, by the thermal element, may lead to a pre-calculated deformation. This pre-calculated deformation may be stored in the memory of the processing unit and/or in the power supply and/or be part of the mathematical model. In total, the deformations of the individual regions may sum up to a total deformation that corrects the wavefront error due to the deformations caused by the thermal environment and the deformations of a mechanical nature, and thus may optimize the optical performance of the mirror and/or wavefront and/or optical surface. The heat input which may be required to be applied to the respective regions to achieve the overall optical effect may be calculated by the above-described analytical model. The above thermal conductivities may, in some examples, relate to coefficients of thermal expansion or alternatively be coefficients of thermal expansion.

In some examples, each of the at least two regions comprises at least one thermal element coupled to each of the at least two regions. If different areas of the mirror and/or optical surface are at different temperatures, the wavefront and/or optical surface may deform at different rates across the mirror and/or optical surface, due to both the temperature differences and the thermal conductivity differences. This can be compensated for by the plurality of thermal elements as each thermal element can be supplied with an appropriate amount of power, by the power supply, to return at least a portion of the wavefront and/or optical surface to its undeformed state and/or any given state and/or to its equilibrium temperature in the respective area which is heated and/or cooled by the thermal element.

In some examples, the mirror is not a monolithic mirror and comprises several mirrors. This may allow for greater control of the deformation of the wavefront and/or optical surface via the thermal element(s) as each mirror may not be affected by the heat inputs provided to the other mirrors. In some examples, each region comprises a mirror. That is to say, each region is located on its own discrete mirror. In some examples, each region comprises a plurality of mirrors. In some examples, some regions comprise a single mirror and some regions comprise a plurality of mirrors.

According to a fourth aspect, we describe a method for altering an optical surface of a mirror coupled to an optical instrument, wherein said optical surface is deformable dependent on a temperature distribution of the mirror. The method comprises supplying, by a power supply, power to one or more thermal elements; and deforming, by the one or more thermal elements, the optical surface of the mirror; wherein the one or more thermal elements are coupled to said mirror and the power supply is coupled to the one or more thermal elements.

The thermal actuating/actuator element may be a heater, a cooler or any combination of these or any other suitable element which allows for thermal energy to be supplied to the mirror and/or thermal energy to be removed from the mirror.

In some examples, the heater and/or the cooler may work in a conductive and/or radiative and/or inductive and/or optical way i.e as a laser. The thermal element is powered by the power supply, wherein the amount of power being supplied to the thermal element may determine the thermal energy being supplied from the thermal element to the mirror. In some examples, the thermal element is at least partially housed in a thermal element unit. In some examples, the thermal element is a thermal actuating/actuator element configured to actively deform a surface of the mirror and/or the optical surface.

The power supply is a preferably electric power supply but may additionally or alternatively use any type of suitable fuel, such as nuclear or hydrogen. In some examples, the power supply is integrated into the thermal element. In some examples, the power supply is at least partially enclosed in a power supply unit.

The one or more thermal elements and the power supply unit may be coupled to one another using wired means, such as, for example, power and/or data cables and/or via wireless means such as, for example, radio signals, Bluetooth or any other suitable wired and/or wireless method. In some examples, the one or more thermal elements and/or the power supply comprises a transmitter and/or receiver used for communication with the other elements of the apparatus and/or external elements related to the optical instrument not mentioned in the present specification and/or Earth and/or a satellite.

In some examples, the method further comprises modelling, by a mathematical model stored in a memory, a deformation of said wavefront dependent on temperature and executing, by a processor coupled to the memory, an instruction, from the memory, to instruct a power supply to supply power to a thermal element to deform said wavefront of said mirror. The thermal element is coupled to said mirror, the power supply is coupled to the thermal element and configured to supply power to said thermal element and the processing unit is coupled to the power supply. In some examples, the memory is coupled to the power supply and/or the one or more thermal elements. In some examples, the memory is located in a processing unit coupled to the power supply and/or one or more thermal elements.

The processing unit may be similar to the processing unit described above, and may be coupled to the mirror, coupled to the optical instrument or stored within the optical instrument. The memory may comprise a mathematical model configured to model a deformation of said optical surface. The model may be pre-programmed before the optical instrument is delivered to a user and/or the processing unit may further comprise a receiver configured to receive signals and/or data from the Earth and/or a satellite which are then used to update the model. Although an optical instrument is mentioned throughout the present specification, the method and apparatus disclosed herein may also be applied to any type of mirror, satellite, antenna or any other suitable device, be it located on the Earth or in space. In some examples, the processing unit is embedded into the power supply and/or at least one of the one or more thermal elements.

In this example, the one or more thermal elements, the power supply unit and the processing unit may be coupled to one another using wired means, such as, for example, power and/or data cables and/or via wireless means such as, for example, radio signals, Bluetooth or any other suitable wired and/or wireless method. In some examples, the one or more thermal elements and/or the power supply and/or the processing unit comprises a transmitter and/or receiver used for communication with the other elements of the apparatus and/or external elements related to the optical instrument not mentioned in the present specification and/or Earth and/or a satellite.

In some examples, the mathematical model comprises the equation:

$$\Delta x^i = \hat{a}^i \left[ \hat{M}(P - \beta) - T_0 \right]$$

wherein $\Delta x^i$ is a vector comprising the deformation of said optical surface for a number of points on the optical surface, $\hat{a}^i$ is a matrix characterizing a deformation of said mirror for a change in temperature, $\hat{M}$ is a matrix describing thermal properties of said mirror in the environment, P is a power input supplied by the power supply to the one or more thermal elements, $\beta$ is a vector describing thermal properties of said mirror in the environment and $T_0$ is an equilibrium temperature. In the above, "i" may specify the direction of the calculated deformation in a given coordinate basis, such as, for example, the Cartesian coordinate system i={x,y,z}, the cylindrical coordinate system l={r,theta,z} or any other suitable coordinate system. In some examples, prelates to one or more finite element nodes. The equilibrium temperature may be the temperature distribution of the mirror that allows for the wavefront to be in its undeformed state. The values of M and $\beta$ may be determined from a heat equation which comprises summing all changes in power due to thermal conductivity and radiative conductivity as well as the heat capacity of the mirror. $\hat{a}^i$ may be derived from the thermal expansion of the mirror under a change of temperature, $\Delta T$. This may mean that $\hat{M}(P-\beta)$ provides the temperature T of a finite element node of the mirror. This may result in the deformation of the mirror being given by $\hat{a}^i(T-T_0)$ = $\hat{a}^i \Delta T$. Here, T may be the temperature distribution required to achieve any given deformation Z, as will be described in more detail below. The above equation may allow for a power input to be calculated that will keep the mirror at the equilibrium temperature for the thermal environment which the mirror is in via the coupling between the power supply and the one or more thermal elements. Moreover, this may mean that as long as the equilibrium temperature is higher than the temperature of the unheated mirror in the environment, any thermal deformation can be compensated by applying a heat input, by the thermal element, to the mirror. This equation may also allow for the deformation of at least a portion of the optical surface due to the heat input caused by the power supply to be calculated. In some examples, the mathematical model may update itself to produce a new model based on the mission that the optical instrument is undertaking. In some examples, the quicker a thermal environment for the optical instrument changes, the higher the frequency of required updates. Furthermore, in some examples, an emissivity and/or an absorptivity of the chosen mirror and/or optical surface material and additionally or alternatively, a heat conductance and/or heat capacity of said material may influence the update frequency. In some examples, if a material which is sensitive to thermal changes is chosen, the update frequency of the model may be increased. The update frequency may be pre-programmed before delivery of the optical instrument and/or may be changed via a transmission form the Earth and/or a satellite received by a receiver coupled to the power supply and/or processing unit.

In some examples, the mathematical model comprises the equation:

$$\chi^2 = \left[ Z(x_1(P), x_2(P)) - x_3(P) \right]^2$$

wherein $X^2$ is a measure of a square difference of a given target state Z of the deformation in a given coordinate direction, $x_1$, $x_2$ and $x_3$ are distance vectors with regards to a given coordinate system and P is a power input to the one or mere thermal elements from the power supply.

That is to say, $x_1(P)$, for example, relates to a deformation in one given axis when a certain power is supplied to the one or more thermal elements. In some examples, Z may be dependent on the deformation along the coordinate directions $x_1$ and $x_2$ and may be parametrized through Zernike polynomials. In some examples, Z is a vector and may be summed by the square difference in between each finite element node that is being considered. $x_1$, $x_2$ and $x_3$ may be calculated by an equation comprising (1 + the initial value of these coordinates before any deformation takes place), wherein each x value comprises one coordinate value in a three dimension coordinate system such as, for example, a Cartesian coordinate system, a cylindrical coordinate system, or any other suitable type of coordinate system. In some examples, the above equation may only be undertaken with respect to one or two dimensions. That is to say, P is a change in power input needed to deform the mirror, and therefore the wavefront, to the target deformation Z and Z may be understood to be a function of the profile of the wavefront and/or the optical surface in its undeformed state, or alternatively in any given state. This equation may allow for the power input needed to return the wavefront and/or the optical surface to its undeformed state, or indeed any given state, to be calculated either directly by setting $X^2$ = 0 and solving the equation, or by a numerical minimization of $X^2$ with respect to the power input P. Additionally or alternatively, $x_3(T)$ instead of $x_3(P)$, for example, could be calculated, thereby calculating the required temperature distribution to deform the optical surface and/or the wavefront to its undeformed state and/or any given state. The processor may, as a result, instruct the power supply to alter the power it outputs to the one or more thermal elements according to the above equation, thereby allowing for at least a portion of the wavefront and/or optical surface to be returned to its undeformed, or any given, state and/or to the equilibrium temperature. In some examples, the values Z and/or, for example, $x_3(P)$ relate to a plurality of predetermined axes such as, for example, an x-axis and a y-axis.

The use of either, or both, of the above equations may allow, for any thermal environment and given initial deformation, a heating input to be found that best compensates the given deformation through thermal expansion of the mirror and/or optical surface. This may include both deformations caused by the thermal environment and deformations of a mechanical nature e.g. gravity release. This may allow for the mirror to be used at its maximum efficiency due to the optical surface and/or wavefront being relatively undeformed.

In some examples, the mathematical model comprises a Zernike polynomial to model the deformation of said optical surface at a discrete point of said optical surface. A Zernike polynomial is known to the skilled person and is not described in further detail here. The Zernike polynomial may allow for one or more Zernike coefficients to be calculated at one or more respective points of the mirror and/or optical surface and/or wavefront. The one or more Zernike coefficients may be measurable by one or more sensors coupled to the mirror and/or optical surface, wherein the one or more sensors transmit the one or more Zernike coefficients to the processing unit and/or power supply. The one or more Zernike coefficients may characterize a deformation of the wavefront and/or optical surface in one or more axes, thereby allowing the model to calculate the power input needed to be supplied to the thermal element in order to return at least a portion of the wavefront and/or optical surface to its undeformed state and/or any given state and/or to the equilibrium temperature. Additionally or alternatively, the one or more Zernike coefficients may be used to cross-correlate the actual measured deformation with the estimated deformation in the model, thereby allowing for a user on Earth or in a satellite to see if the model is functioning properly and, if necessary, allow for the user to update the model. In some examples, the processing unit and/or the power supply comprises a machine learning module configured to correlate the actual measured deformation with the estimated deformation in the model and update the model automatically. In some examples, the Zernike polynomial may depend on the profile of the wavefront and/or mirror and/or the mechanical structure of the mirror and/or the optical surface. In some examples, low orders of Zernike polynomials and/or coefficients are used to reduce the memory and/or processing power needed to be used by the processing unit.

Throughout the present specification, when a return of "the wavefront" and/or "the optical surface" to its undeformed state and/or equilibrium temperature is described, it should be understood that the return to the undeformed state and/or equilibrium temperature may alternatively only apply to at least a portion of the wavefront and/or optical surface. This may also apply to any other suitable context within the present application.

Any of the above-mentioned aspects may allow for the performance of the optical surface of the mirror to be optimized.

Any of the above-mentioned aspects may allow for the wavefront at an image of an optical system to be optimized, wherein the apparatus and/or the mirror described herein is a part of the optical system. This may allow for the image to be made clearer and/or accurate due to the optimization of the wavefront caused by the processes and methods described herein. This, in turn, may allow for the optical system to be more accurate and more efficient as the images it receives are clearer than images delivered to optical systems known in the prior art.

Any of the above-mentioned aspects may allow for the wavefront error introduced by other elements in an optical system, wherein the apparatus and/or the mirror described herein is a part of the optical system, to be compensated for and/or reduced. This may improve the performance of the optical system as the wavefront error is reduced.

Any of the above-mentioned aspects may allow for the use of low CTE mirror substrate materials in an optical system to be avoided. This may allow for thermomechanical deformations of monolithic primary mirrors and/or monolithic primary mirrors in optical systems to not reach a magnitude for which severe degradations of the wavefront cannot be avoided.

Throughout the present specification, if "a", "an" or "the" is used in relation to an element, it is to be understood that this also covers "one or more" of the same element and vice versa.

It is clear to a person skilled in the art that the statements set forth herein may be implemented under use of hardware circuits, software means, or a combination thereof. The software means can be related to programmed microprocessors or a general computer, an ASIC (Application Specific Integrated Circuit) and/or DSPs (Digital Signal Processors). For example, the processing unit may be implemented at least partially as a computer, a logical circuit, an FPGA (Field Programmable Gate Array), a processor (for example, a microprocessor, microcontroller ($\mu$C) or an array processor)/a core/a CPU (Central Processing Unit), an FPU (Floating Point Unit), NPU (Numeric Processing Unit), an ALU (Arithmetic Logical Unit), a Coprocessor (further microprocessor for supporting a main processor (CPU)), a GPGPU (General Purpose Computation on Graphics Processing Unit), a multi-core processor (for parallel computing, such as simultaneously performing arithmetic operations on multiple main processor(s) and/or graphical processor(s)) or a DSP.

It is further clear to the person skilled in the art that even if the herein-described details will be described in terms of an apparatus, these details may also be implemented or realized in a suitable method, a computer processor or a memory connected to a processor, wherein the memory can be provided with one or more programs that perform the method, when executed by the processor.

Even if some of the aspects described above have been described in reference to the first aspect, these aspects may also apply to the second and/or third and/or fourth aspects and vice versa.

BRIEF DESCRIPTION OF THE DRAWINGS

These and other aspects of the invention will now be further described, by way of example only, with reference to the accompanying figures, wherein like reference numerals refer to like parts, and in which:

Figure 1    shows a schematic illustration of an optical instrument according to an example described herein;

Figure 2    shows a schematic illustration of a mirror according to an example described herein;

Figure 3    shows a schematic illustration of an apparatus according to an example described herein;

Figure 4    shows a schematic illustration of a mirror according to an example described herein; and

Figure 5    shows a flow diagram of a method according to an example described herein.

DETAILED DESCRIPTION OF THE PREFERRED EMBODIMENTS

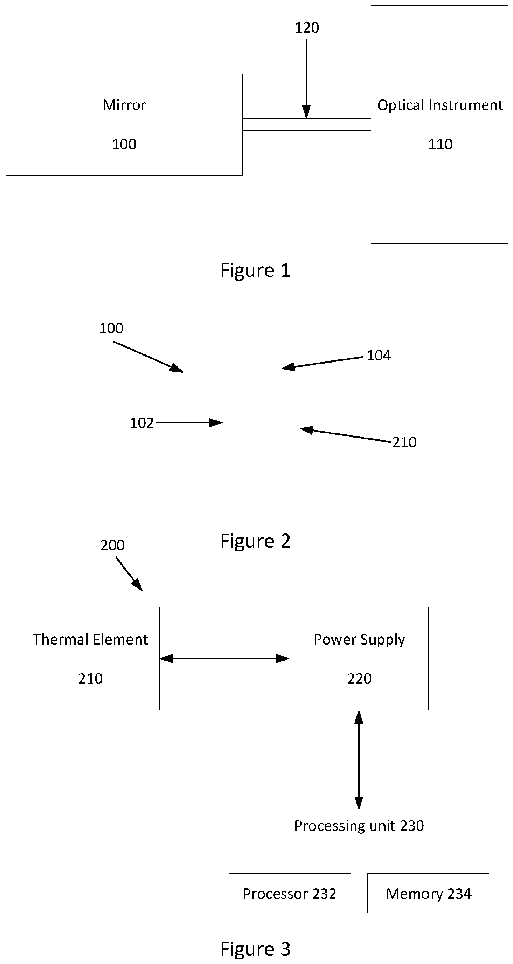

Figure 1 shows a schematic illustration of an optical instrument 110 according to an example described herein.

The mirror 100 of the optical instrument 110 is coupled to the optical instrument 110 via an arm 120. The mirror 100 will be described in more detail below. The optical instrument 110 may be any suitable optical instrument. If the optical instrument 110 is a satellite, the satellite may be a telescope, a GPS/GNSS satellite, a communications satellite or any other suitable type of satellite. Arms 120 for coupling mirrors 100 to optical instruments 110 are well known in the prior art. In some examples, there is no arm 120 coupling the mirror 100 to the optical instrument 110.

Figure 2 shows a schematic illustration of a mirror 100 according to an example described herein.

The mirror 100 comprises a front side which comprises an optical surface 102 and a back side 104 to which a thermal element 210 is coupled. The thermal element 210 will be described in more detail below.

In some examples, the mirror 100 and/or the optical surface 102 further comprises one or more sensors. One or more Zernike coefficients may be measurable by one or more sensors coupled to the mirror 100 and/or optical surface 102. The measurements from the one or more sensors may then be transmitted to a processing unit (see figure 3). The one or more Zernike coefficients may characterize a deformation of the mirror 100 and/or optical surface 102 in one or more axes due to deformations caused by the thermal environment and deformations of a mechanical nature.

The thermal element 210 is preferably coupled to the back side 104 of the mirror 100 so that the thermal element does not interfere with the operation of the optical surface 102. The thermal element 210 is coupled to the back side 104 of the mirror 100 via screws, nuts and bolts, soldering, glue or any other suitable method. In some examples, the thermal element 210 may heat the back side 104 of the mirror 100 via radiative heat transfer i.e. by not directly contacting the back side 104 of the mirror 100.

Figure 3 shows a schematic illustration of an apparatus 200 according to an example described herein.

The apparatus 200 comprises a thermal element 210, a power supply 220 and a processing unit 230

comprising a processor 232 and a memory 234.

The thermal element 210 may comprise a heating element and/or a cooling element configured to heat and/or cool the back side 104 of the mirror 100. As a result of the heating and/or cooling of the back side 104 of the mirror 100, the mirror 100 may then deform. Resultantly, the optical surface 102 may also deform. The use of the thermal element 210 within the apparatus 200 may then allow for at least a portion of the optical surface 102 and/or wavefront to be deformed back into its natural, undeformed state, thereby counteracting the deformations caused by the thermal environment and deformations of a mechanical nature. This may then allow for the optical surface 102, and therefore the mirror 100, to function at maximal efficiency in a range of environments. The thermal element 210 may comprise a metallic heating and/or cooling element, such as, for example, nichrome, Kanthal or cupronickel and/or ceramic/semiconductor heating and/or cooling elements such as, for example, Molybdenum disilicide, silicon nitride, silicon carbide or PTC ceramic elements. The thermal element 210 may comprise at least one of the aforementioned elements.

The thermal element 210 is coupled to a power supply 220. The power supply 220 is a preferably electric power supply but may additionally or alternatively use any type of suitable fuel, such as nuclear or hydrogen. In some examples, the power supply 220 is integrated into the thermal element 210 or externally coupled to the thermal element 210. The thermal element 210 is powered by the power supply 220, wherein the amount of power of supplied to the thermal element 210, by the power supply 220, may determine the heat energy being supplied from the thermal element 210 to the mirror 100.

The power supply 220 is coupled to a processing unit 230. The processing unit comprises a processor 232 and a memory 234. The memory 234 stores a mathematical model configured to model a deformation of said optical surface 102 and/or the wavefront received by the mirror 100 and/or optical surface 102. Furthermore, the processor 232 is configured to execute an instruction, from the memory 234, to instruct the power supply 220 to supply power to the thermal element 210 to deform said optical surface 102 of said mirror 100 in the manner described above. Furthermore, the processing unit 230 may be integrated into the thermal element 210, integrated into the power supply 220, externally coupled to the thermal element 210 and/or power supply 220 or located in, or on, the optical instrument 110. Coupling methods, such as coupling via screws, nuts and bolts, soldering or glue, are known to the skilled person and are not described in further detail.

The mathematical model may be pre-programmed before the optical instrument 110 is delivered to a user and/or the processing unit 230 and/or the power supply 220 may further comprise a receiver configured to receive signals and/or data from the Earth and/or a satellite which is then used to update the model.

In some examples, the mathematical model is configured to determine a temperature distribution of the mirror 100 and/or optical surface 102 by taking into account a power value being supplied by the power supply 220 to the thermal element 210, a conductive heat transfer of the mirror 100 and a radiative coupling of the mirror 100 to an environment surrounding the mirror 100. This may allow for the temperature distribution of the mirror 100 for any given heat input and for any set of thermal boundary conditions that specify the radiative and conductive environment the mirror 100 is placed in i.e. the interactions with the optical instrument 110, the surrounding space, Sun and the Earth to be calculated. In some examples, a first approximation the model is linear and thereby the heat input to achieve the temperature distribution is determined by inverting the equation. In some examples, information about the conductive heat transfer and radiative coupling of the mirror is pre-programmed into the model before delivery of the optical instrument 110. The conductive heat transfer and radiative coupling values of the mirror 100 and/or optical surface 102 are preferably known before delivery of the optical instrument 110, however, these values may be updated after the apparatus 200 has been delivered via a receiver located in the processing unit 230 and/or optical instrument 110 and/or power supply 220.

In some examples, the mathematical model comprises the equation:

$$\Delta x^i = \hat{a}^i \left[ \hat{M}(P - \beta) - T_0 \right]$$

wherein $\Delta x^i$ is a vector comprising the deformation of said optical surface 102 for a number of points on the optical surface 102, $\hat{a}^i$ is a matrix characterizing a deformation of said mirror 100 for a change in temperature, $\hat{M}$ is a matrix describing thermal properties of said mirror 100 in the environment, P is a power input supplied by the power supply 220 to the thermal element 210, $\beta$ is a vector describing thermal properties of said mirror 100 in the environment and $T_0$ is an equilibrium temperature. In the above, "i" may specify the direction of the calculated deformation in a given coordinate basis, such as, for example, the Cartesian coordinate system i={x,y,z}, the cylindrical coordinate system I={r,theta,z} or any other suitable coordinate system. In some examples, $\Delta x_i$ relates to one or more finite element nodes. The equilibrium temperature may be the temperature distribution of the mirror 100 and/or optical surface 102 that allows for the optical surface 102 and/or wavefront to be in its undeformed state. The values of M and $\beta$ may be determined from a heat equation which comprises summing all changes in power due to thermal conductivity and radiative conductivity as well as the heat capacity of the mirror 100. $\hat{a}^i$ may be derived from the thermal expansion of the mirror 100 under a change of temperature, $\Delta T$. This may mean that $\hat{M}(P-\beta)$ provides the temperature T of a finite element node of the mirror 100. This may result in the deformation of the mirror 100 and/or optical surface 102 being given by $\hat{\alpha}^j$ (T-T$_0$) = $\hat{\alpha}^j$ T. Here, T may be the temperature distribution required to achieve any given deformation Z. The above equation may allow for a power input to be calculated that will keep the mirror 100 and/or optical surface 102 at the equilibrium temperature for the thermal environment which the mirror 100 is in via the coupling between the power supply and the one or more thermal elements 210. Moreover, this may mean that as long as the equilibrium temperature is higher than the temperature of the unheated mirror 100 in the environment, any thermal deformation can be compensated by applying a heat input, by the thermal element 210, to the mirror. This equation may also allow for the deformation of at least a portion of the optical surface 102 due to the heat input caused by the power supply 220 to be calculated. In some examples, the mathematical model may update itself to produce a new model based on the mission that the optical instrument 110 is undertaking. In some examples, the quicker a thermal environment for the optical instrument 110 changes, the higher the frequency of required updates. Furthermore, in some examples, an emissivity and/or an absorptivity of the chosen mirror 100 and/or optical surface 102 material and additionally or alternatively, a heat conductance and/or heat capacity of said material may influence the update frequency. In some examples, if a material which is sensitive to thermal changes is chosen, the update frequency of the model may be increased. The update frequency may be pre-programmed before delivery of the optical instrument 110 and/or may be changed via a transmission form the Earth and/or a satellite received by a receiver coupled to the power supply 220 and/or processing unit 230.

The above equation may be determined due to a change in temperature leading to thermal expansion, which is described by a linear law and is dependent on the temperature difference T-T$_0$ and the thermal expansion coefficient, CTE. Furthermore, if the mirror 100 is isostatically constrained, meaning that it is fixed at three symmetrically placed points that allow the mirror 100 to expand and contract along its radius but not to move in any other direction, the total deformation of the mirror 100 under a given temperature distribution can be obtained by summing up all the deformations caused by the temperature change of each single finite element node.

In some examples, the mathematical model comprises the equation:

$$\chi^2 = [Z(x_1(P), x_2(P)) - x_3(P)]^2$$

wherein $X^2$ is a measure of a square difference of a given target state Z of the deformation in a given coordinate direction, $x_1$, $x_2$ and $x_3$ are distance vectors with regards to a given coordinate system and P is a power input to the one or mere thermal elements 210 from the power supply 220. That is to say, $x_1(P)$, for example, relates to a deformation in one given axis when a certain power is supplied to the one or more thermal elements 210. In some examples, Z may be dependent on the deformation along the coordinate directions $x_1$ and $x_2$ and may be parametrized through Zernike polynomials. In some examples, Z is a vector and may be summed by the square difference in between each finite element node that is being considered. $x_1$, $x_2$ and $x_3$ may be calculated by an equation comprising (1 + the initial value of these coordinates before any deformation takes place), wherein each x value comprises one coordinate value in a three dimension coordinate system. In some examples, the above equation may only be undertaken with respect to one or two dimensions. That is to say, P is a change in power input needed to deform the mirror 100 and/or optical surface 102, and therefore the wavefront, to the target deformation Z and Z may be understood to be a function of the profile of the optical surface 102 and/or the wavefront in its undeformed state, or alternatively in any given state. This equation may allow for the power input needed to return the wavefront and/or the optical surface 102 to its undeformed state, or indeed any given state, to be calculated either directly by setting $X^2 = 0$ and solving the equation, or by a numerical minimization of $X^2$ with respect to the power input P. Additionally or alternatively, $x_3(T)$ instead of $x_3(P)$, for example, could be calculated, thereby calculating the required temperature distribution to deform the optical surface 102 and/or the wavefront to its undeformed state and/or any given state.

The processor 232 may, as a result, instruct the power supply 220 to alter the power it outputs to the one or more thermal elements 210 according to the above equation, thereby allowing for at least a portion of the wavefront and/or optical surface 102 to be returned to its undeformed, or any given, state and/or to the equilibrium temperature. In some examples, the values Z and/or, for example, $x_3(P)$ relate to a plurality of predetermined axes such as, for example, an x-axis and a y-axis.

The above two equations are preferably linked via the value $x_3(P)$ being obtained from the vector $\Delta x^i$. This may allow for the processing unit 230 to calculate the required power needed to be supplied to the thermal element 210 in order to return at least a portion of the wavefront and/or optical surface 102 to its undeformed state and/or any given state and/or to its equilibrium temperature. However, in some examples, the above equations may be used in isolation and may not be linked to one another.

The elements of the apparatus 200 may be coupled to one another using wired means, such as, for example, power and/or data cables and/or via wireless means such as, for example, radio signals, Bluetooth or any other suitable method. Furthermore, the elements of the apparatus 200 may comprise transmitters and/or receivers configured to communicate with a user on the Earth and/or in a second satellite.

Furthermore, the memory 234 of the processing unit 230 may take into account the measurements relating to the Zernike coefficients described above. In particular, the Zernike coefficients may characterize a deformation of the mirror 100 and/or optical surface 102 in one or more axes, thereby allowing the model to calculate the power input needed to be supplied, by the power supply 220, to the thermal element 210 in order to return at least a portion of the optical surface 102 to its undeformed state and/or any given state and/or to the equilibrium temperature. Additionally or alternatively, the one or more Zernike coefficients may be used to cross-correlate the actual measured deformation with the estimated deformation in the model, thereby allowing for a user on Earth and/or in a satellite to see if the model is functioning properly and, if necessary, allow for the user to update the model so that it is in line with the actual measured deformation. Furthermore, the model may be updated from the Earth and/or from a satellite according to any improvements found in the field of thermal deformation of mirrors 100, or any adjacent field, so that the model is as accurate as possible. In some examples, the one or more sensors which measure the Zernike coefficients may also be updated via a wired and/or wireless coupling between the one or more sensors and the processing unit 230 and/or the power supply 220 and/or at least one of the one or more thermal elements 210. This link may also allow for the user to determine if one of the sensors is malfunctioning and/or losing accuracy and allow for the model and/or processing unit 230 to be updated to discount and/or disregard readings from that sensor.

In some examples, the apparatus 200 further comprises a temperature sensor coupled to the mirror 100 and/or the optical surface 102. This temperature sensor may then, in turn, be coupled to the processing unit 230 and/or the power supply 220 in a wired and/or wireless manner. The temperature sensor may be used in a similar manner to the sensor described above in relation to the Zernike coefficients, in that the actual temperature of the mirror 100 and/or optical surface 102 could be measured and then used to allow the model to calculate the power input needed to be supplied to the thermal element 210, by the power supply 220, in order to return at least a portion of the optical surface 102 and/or wavefront to its undeformed state and/or any given state and/or to the equilibrium temperature. Additionally or alternatively, the one or more inputs from the temperature sensor may be used to cross-correlate the actual measured temperature with the estimated temperature of the mirror 100 and/or optical surface 102 in the model, thereby allowing for a user on Earth and/or in a satellite to see if the model is functioning properly and, if necessary, allow for the user to update the model. In a manner similar to the one above, the temperature sensor may also be updated via a wired and/or wireless coupling between the temperature sensors and the processing unit 230 and/or power supply 220. This link may also allow for the user to determine if one of the temperature sensors is malfunctioning and/or losing accuracy and allow for the model and/or processing unit 230 to be updated to discount and/or disregard readings from that sensor. In some examples, there are a plurality of temperature sensor placed on the mirror 100 and/or optical surface 102.

In some examples, the one or more sensors which measure the Zernike coefficients and/or the temperature sensor may be regarded as part of the apparatus 200.

In some examples, the processing unit 230 further comprises a machine learning module configured to correlate the actual measured deformation with the estimated deformation in the model, and the actual measured temperature with the estimated temperature in the model, and update the model automatically. The machine learning module may be part of the memory 234 or a separate element within the processing unit 230 coupled to the memory 234. In some examples, the machine learning unit is outside the processing unit and is coupled to a transmitter or transceiver which transmits updates to a receiver or transceiver of the processing unit 230.

In a non-limiting example, a particular example of the capabilities of the described invention is described below.

In an assessment, it was determined how well the deformations of an aluminum mirror caused by gravity release in an x-direction could be compensated. For the analysis, the following assumptions were made:

- The thermal environment can be characterized to be 0°C in front of the mirror and 20°C on all remaining sides
- The mirror is set to be undeformed at $T_0$ = 30°C
- Any rigid body motion is removed from the target deformation

The invention described in the present specification was, in this assessment, able to reduce the RMS wavefront error by a factor 4.5 from 0.00125mm to 0.00028mm. In this example, the required power needed to be supplied to the thermal element 210, by the power supply, was 72W. The main contributor to the heating power was not the compensation of the deformations but the power needed to keep the mirror at a temperature close to $T_0$. For less ideal conditions (i.e. T0 = 21°C) the RMS wavefront error could still be lowered by a factor of 2 when compared to the uncompensated deformation and required a power of 15W to be supplied to the thermal element 210.

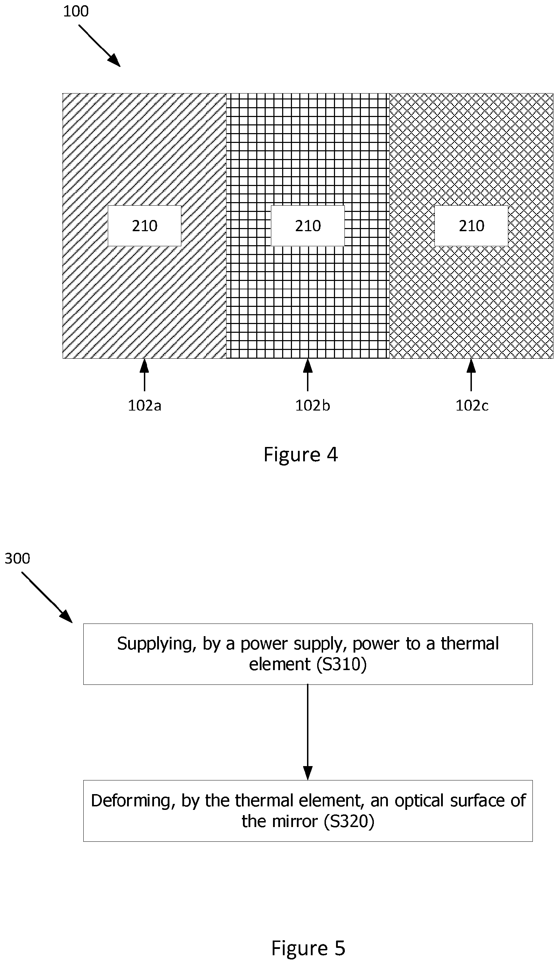

Figure 4 shows a schematic illustration of a mirror 100 according to an example described herein.

In this example, the optical surface 102 of the mirror 100 comprises a plurality of different regions 102a, b, c with a thermal element 210 coupled to each region 102a, b, c. Each region 102a, b, c comprises a material with a different thermal conductivity when compared to the other regions 102a, b, c. This may be achieved by using differing materials and/or by using a same material, wherein the same material is treated in such a way that it can comprise at least two differing thermal conductivities in at least two distinct regions 102a, b, c. In some examples, the regions 102a, b, c are arranged such that there are only two materials with differing thermal conductivities comprised in the optical surface 102, but regions 102a, b, c with materials with the same thermal conductivity do not contact each other. For each region 102a, b, c of the mirror 100, the heat input applied to the respective region 102a, b, c, by its respective thermal element 210, may lead to a pre-calculated deformation, as estimated and/or calculated by the model in the memory 234. In total, the deformations of the individual regions 102a, b, c may sum up to a total deformation that corrects the wavefront error due to the deformations caused by the thermal environment and the deformations of a mechanical nature, and thus may optimize the optical performance of the mirror 100 and/or optical surface 102 and/or optical instrument 110. The heat input which may be required to be applied to the respective regions 102a, b, c to achieve the overall optical effect may be calculated by the above-described analytical mathematical model.

If different areas of the mirror 100 and/or optical surface102 are at different temperatures, the optical surface 102 and/or the wavefront may deform at different rates across the mirror 100 and/or optical surface 102, due to both the temperature differences and the thermal conductivity differences. This can be compensated for by the plurality of thermal elements 210 as each thermal element 210 can be supplied with an appropriate amount of power, by the power supply 220, to return at least a portion of the optical surface 102 and/or the wavefront to its undeformed state and/or any given state and/or to its equilibrium temperature in the respective region 102a, b, c which is heated and/or cooled by the thermal element 210.

In some examples, each thermal element 210 is coupled to its own respective power supply 220. In some examples, a plurality of thermal elements 210 are coupled to a single power supply 220. In some examples, a plurality of power supplies 220 are coupled to a single processing unit 230. In some examples, each power supply 220 is coupled to its own respective processing unit 230. In this example, each processing unit 230 is coupled to a main controller configured to control the output of processing units 230. In some examples, each processing unit 230 has its own controller configured to control the output of said processing unit 230 and/or receive instructions from external elements related to the optical instrument 110 not mentioned in the present specification.

That is to say, different heat inputs, and therefore different levels of deformation, are applied through heating (or equivalently cooling) individual regions 102a, b, c of the mirror 100 via the thermal elements 210. Due to a dedicated thermo-mechanical design, these regions 102a, b, c have a certain thermal conductivity across the region 102a, b, c and a different one to the neighboring regions 102a, b, c. For each region 102a, b, c of the mirror 100, the applied heat input leads to a pre-calculated deformation, calculated by the model. In total, the deformations of the individual regions 102a, b, c may sum up to a total deformation that corrects the wavefront error and thus optimizes the optical performance of the optical surface 102 and, resultantly, the mirror 100. The required heat inputs applied to the individual regions 102a, b, c required to achieve the overall optical effect are calculated by the above-described model. These heat inputs are then linked to the required heat input to certain regions of the mirror 102a, b, c in order to return the optical surface 102 to its undeformed state. In some examples, the mirror 100 and/or the optical surface 102 and/or the wavefront is deformed to a state which is not the same as the undeformed state. This state may, in some examples, provide better performance of the mirror 100 and/or the optical surface 102 and/or optical instrument 110 due to the above-mentioned environmental and mechanical conditions. In some examples, the mathematical model calculates this other state and resultantly, the processing unit 230 may instruct the power supply 220 to supply power to the one or more thermal elements 210 in order for the mirror 100 and/or the optical surface 102 to be deformed into this other state.

Figure 5 shows a flow diagram of a method 300 according to an example described herein.

The method comprises supplying S310, by a power supply 220, power to one or more thermal elements 210; and deforming S320, by the one or more thermal elements 210, the optical surface 102 of the mirror 100; wherein the one or more thermal elements 210 are coupled to said mirror 100 and the power supply 220 is coupled to the one or more thermal elements 210.

The method 300 may function in such a way so that the apparatus 200 described above can function in the ways described above.

No doubt many other effective alternatives will occur to the skilled person. It will be understood that the invention is not limited to the described embodiments and encompasses modifications apparent to those skilled in the art and lying within the scope of the claims appended hereto.

**Claims**

1. An apparatus (200) for altering an optical surface (102) of a mirror (100) coupled to a optical instrument (110), wherein said optical surface (102) is deformable dependent on a temperature distribution of the mirror (100), the apparatus (200) comprising:

   one or more thermal elements (210) coupled to said mirror (100); and
   a power supply (220) coupled to the one or more thermal elements (210) configured to supply power to said one or more thermal elements (210) to deform said optical surface (102) of said mirror (100).

**2.** The apparatus (200) of claim 1 further comprising a processing unit (230) comprising a processor (232) and a memory (234), wherein the processing unit (230) is coupled to the power supply (220);

wherein the memory (234) comprises a mathematical model configured to model a deformation of said optical surface (102) dependent on temperature; and
wherein the processor (232) is configured to execute an instruction, from the memory (234), to instruct the power supply (220) to supply power to the one or more thermal elements (210) to deform said optical surface (102) of said mirror (100).

**3.** The apparatus (200) as claimed in claim 2, wherein the mathematical model comprises the equation:

$$\Delta x^i = \hat{a}^i \big[ \hat{M}(P - \beta) - T_0 \big]$$

wherein $\Delta x^i$ is a vector comprising the deformation of said optical surface (102) for a number of points on the optical surface (102), $\hat{a}^i$ is a matrix characterizing a deformation of said mirror (100) for a change in temperature, $\hat{M}$ is a matrix describing thermal properties of said mirror (100) in the environment, P is a power input supplied by the power supply (220) to the one or more thermal elements (210), $\beta$ is a vector describing thermal properties of said mirror (100) in the environment and $T_0$ is an equilibrium temperature.

**4.** The apparatus (200) as claimed in claim 2 or 3, wherein the mathematical model comprises the equation:

$$\chi^2 = [Z(x_1(P), x_2(P)) - x_3(P)]^2$$

wherein $X^2$ is a measure of a square difference of a given target state Z of the deformation of the optical surface (102) in a given coordinate direction, $x_1$, $x_2$ and $x_3$ are distance vectors with regards to a given coordinate system and P is a power input to the one or mere thermal elements (210) from the power supply (220).

**5.** The apparatus (200) as claimed in claim 4, when dependent on claim 3, wherein the value $x_3(P)$ is obtained from the vector $\Delta x^i$.

**6.** The apparatus (200) as claimed in any one of the preceding claims, wherein the one or more thermal elements (210) are distributed evenly on said mirror (100).

**7.** The apparatus (200) as claimed in any one of the preceding claims, when dependent on claim 2, wherein the mathematical model comprises a Zernike polynomial to model the deformation of said optical surface (102) at a discrete point of said optical surface (102).

**8.** The apparatus (200) as claimed in any one of the preceding claims, when dependent on claim 2, wherein the mathematical model is configured to maintain a temperature of said optical surface (102).

**9.** The apparatus (200) as claimed in any preceding claim, wherein the deforming of the optical surface (102) of the mirror (100), by the one or more thermal elements (210), is configured to reduce a wavefront error of a wavefront received by the mirror (100).

**10.** A mirror (100) coupled to an optical instrument comprising the apparatus (200) as claimed in any one of the preceding claims, the mirror (100) further comprising at least two regions (102a, b, c), wherein a first region (102a) comprises a first thermal conductivity and a second region (102b) comprises a second thermal conductivity, wherein the first and second thermal conductivities are not equal.

**11.** The mirror (100) as claimed in claim 10, wherein each of the at least two regions (102a, b, c) comprises at least one thermal element (210) coupled to each of the at least two regions (102 a, b, c).

**12.** A use of the apparatus (200) as claimed in any one of claims 1 to 9 in a space-borne optical instrument and/or a use of the mirror (100) as claimed in claim 10 or 11 in a space-borne optical instrument.

**13.** A method (300) for altering an optical surface of a mirror coupled to an optical instrument, wherein said optical surface is deformable dependent on a temperature distribution of the mirror, the method comprising;

supplying (S310), by a power supply, power to one or more thermal elements; and
deforming (S320), by the one or more thermal elements, the optical surface of the mirror;
wherein the one or more thermal elements are coupled to said mirror and the power supply is coupled to the one or more thermal elements.

**14.** The method (300) as claimed in claim 13, further comprising:
modeling, by a mathematical model stored in a memory, a deformation of said optical surface dependent on temperature, wherein the mathematical model comprises the equation:

$$\Delta x^i = \hat{\alpha}^i \left[ \hat{M}(P - \beta) - T_0 \right]$$

wherein $\Delta x^i$ is a vector comprising the deformation of said optical surface for a number of points on the optical surface, $\hat{\alpha}^i$ is a matrix characterizing a deformation of said mirror for a change in temperature, $\hat{M}$ is a matrix describing thermal properties of said mirror in the environment, P is a power input supplied by the power supply to the one or more thermal elements, $\beta$ is a vector describing thermal properties of said mirror in the environment and $T_0$ is an equilibrium temperature.

15. The method (300) as claimed in claim 14, wherein the mathematical model comprises the equation:

$$\chi^2 = [Z(x_1(P), x_2(P)) - x_3(P)]^2$$

wherein $X^2$ is a measure of a square difference of a given target state Z of the deformation of the optical surface (102) in a given coordinate direction, $x_1$, $x_2$ and $x_3$ are distance vectors with regards to a given coordinate system and P is a power input to the one or mere thermal elements (210) from the power supply (220).

**Amended claims in accordance with Rule 137(2) EPC.**

1. An apparatus (200) for altering an optical surface (102) of a mirror (100) coupled to a optical instrument (110), wherein said optical surface (102) is deformable dependent on a temperature distribution of the mirror (100), the apparatus (200) comprising:

    one or more thermal elements (210) couplable to said mirror (100); and
    a power supply (220) coupled to the one or more thermal elements (210) configured to supply power to said one or more thermal elements (210) to deform said optical surface (102) of said mirror (100).

2. The apparatus (200) of claim 1 further comprising a processing unit (230) comprising a processor (232) and a memory (234), wherein the processing unit (230) is coupled to the power supply (220);

    wherein the memory (234) comprises a mathematical model configured to model a deformation of said optical surface (102) dependent on temperature; and
    wherein the processor (232) is configured to execute an instruction, from the memory (234), to instruct the power supply (220) to supply power to the one or more thermal elements (210) to deform said optical surface (102) of said mirror (100).

3. The apparatus (200) as claimed in claim 2, wherein the mathematical model comprises the equation:

$$\Delta x^i = \hat{\alpha}^i \left[ \hat{M}(P - \beta) - T_0 \right]$$

wherein $\Delta x^i$ is a vector comprising the deformation of said optical surface (102) for a number of points on the optical surface (102), $\hat{\alpha}^i$ is a matrix characterizing a deformation of said mirror (100) for a change in temperature, $\hat{M}$ is a matrix describing thermal properties of said mirror (100) in the environment, P is a power input supplied by the power supply (220) to the one or more thermal elements (210), $\beta$ is a vector describing thermal properties of said mirror (100) in the environment and $T_0$ is an equilibrium temperature.

4. The apparatus (200) as claimed in claim 2 or 3, wherein the mathematical model comprises the equation:

$$\chi^2 = [Z(x_1(P), x_2(P)) - x_3(P)]^2$$

wherein $X^2$ is a measure of a square difference of a given target state Z of the deformation of the optical surface (102) in a given coordinate direction, $x_1$, $x_2$ and $x_3$ are distance vectors with regards to a given coordinate system and P is a power input to the one or mere thermal elements (210) from the power supply (220).

5. The apparatus (200) as claimed in claim 4, when dependent on claim 3, wherein the value $x_3(P)$ is obtained from the vector $\Delta x^i$.

6. The apparatus (200) as claimed in any one of the preceding claims, wherein the one or more thermal elements (210) are distributed evenly on said mirror (100).

7. The apparatus (200) as claimed in any one of the preceding claims, when dependent on claim 2, wherein the mathematical model comprises a Zernike polynomial to model the deformation of said optical surface (102) at a discrete point of said optical surface (102).

8. The apparatus (200) as claimed in any one of the preceding claims, when dependent on claim 2, wherein the mathematical model is configured to maintain a temperature of said optical surface (102).

**9.** The apparatus (200) as claimed in any preceding claim, wherein the deforming of the optical surface (102) of the mirror (100), by the one or more thermal elements (210), is configured to reduce a wavefront error of a wavefront received by the mirror (100).

**10.** A mirror (100) coupled to an optical instrument comprising the apparatus (200) as claimed in any one of the preceding claims, the mirror (100) further comprising at least two regions (102a, b, c), wherein a first region (102a) comprises a first thermal conductivity and a second region (102b) comprises a second thermal conductivity, wherein the first and second thermal conductivities are not equal.

**11.** The mirror (100) as claimed in claim 10, wherein each of the at least two regions (102a, b, c) comprises at least one thermal element (210) coupled to each of the at least two regions (102 a, b, c).

**12.** A use of the apparatus (200) as claimed in any one of claims 1 to 9 in a space-borne optical instrument and/or a use of the mirror (100) as claimed in claim 10 or 11 in a space-borne optical instrument.

**13.** A method (300) for altering an optical surface of a mirror coupled to an optical instrument, wherein said optical surface is deformable dependent on a temperature distribution of the mirror, the method comprising;

supplying (S310), by a power supply, power to one or more thermal elements; and
deforming (S320), by the one or more thermal elements, the optical surface of the mirror;
wherein the one or more thermal elements are coupled to said mirror and the power supply is coupled to the one or more thermal elements.

**14.** The method (300) as claimed in claim 13, further comprising:

modeling, by a mathematical model stored in a memory, a deformation of said optical surface dependent on temperature, wherein the mathematical model comprises the equation:

$$\Delta x^i = \hat{\alpha}^i \left[ \hat{M}(P - \beta) - T_0 \right]$$

wherein $\Delta x^i$ is a vector comprising the deformation of said optical surface for a number of points on the optical surface, $\hat{\alpha}^i$ is a matrix characterizing a deformation of said mirror for a change in temperature, $\hat{M}$ is a matrix describing thermal properties of said mirror in the environment, P is a power input supplied by the power supply to the one or more thermal elements, $\beta$ is a vector describing thermal properties of said mirror in the environment and $T_0$ is an equilibrium temperature.

**15.** The method (300) as claimed in claim 14, wherein the mathematical model comprises the equation:

$$\chi^2 = [Z(x_1(P), x_2(P)) - x_3(P)]^2$$

wherein $X^2$ is a measure of a square difference of a given target state Z of the deformation of the optical surface (102) in a given coordinate direction, $x_1$, $x_2$ and $x_3$ are distance vectors with regards to a given coordinate system and P is a power input to the one or mere thermal elements (210) from the power supply (220).

120

Mirror

100

Optical Instrument

110

Figure 1

100

104

102

210

Figure 2

200

Thermal Element

210

Power Supply

220

Processing unit 230

Processor 232

Memory 234

Figure 3

100

210

210

210

102a

102b

102c

Figure 4

300

Supplying, by a power supply, power to a thermal
element (S310)

Deforming, by the thermal element, an optical surface of
the mirror (S320)

Figure 5

Europäisches
Patentamt

European
Patent Office

Office européen
des brevets

# EUROPEAN SEARCH REPORT

**Application Number**

EP 22 16 8330

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | STAHL H PHILIP ET AL: "Predictive thermal control (PTC) technology to enable thermally stable telescopes: first two year status", SPIE PROCEEDINGS; [PROCEEDINGS OF SPIE ISSN 0277-786X], SPIE, US, vol. 11116, 9 September 2019 (2019-09-09), pages 111160U-111160U, XP060126053, DOI: 10.1117/12.2530117 ISBN: 978-1-5106-3673-6 * Section 5.3+5.3.1; figure 25 * * Section 3 * * figures 12,27 * * page 8, paragraph first – paragraph second; figure 16 * * last two paragraphs; page 3 * * section 5.1 * ----- | 1-10, 12-15 | INV. G02B7/00 G02B7/18 G02B27/00 |
| A | US 2010/201958 A1 (HAUF MARKUS [DE] ET AL) 12 August 2010 (2010-08-12) * claim 1; figures 1,23 * ----- | 11 | TECHNICAL FIELDS SEARCHED (IPC) G02B |
| A | US 2014/307239 A1 (BACH FLORIAN [DE] ET AL) 16 October 2014 (2014-10-16) * figure 10 * ----- | 11 | |

The present search report has been drawn up for all claims

| Place of search | Date of completion of the search | Examiner |
|---|---|---|
| Munich | 21 September 2022 | Linke, Felix |

EPO FORM 1503 03.82 (P04C01)

## ANNEX TO THE EUROPEAN SEARCH REPORT
## ON EUROPEAN PATENT APPLICATION NO.

EP 22 16 8330

This annex lists the patent family members relating to the patent documents cited in the above-mentioned European search report.
The members are as contained in the European Patent Office EDP file on
The European Patent Office is in no way liable for these particulars which are merely given for the purpose of information.

21-09-2022

| Patent document cited in search report | | | Publication date | Patent family member(s) | | | Publication date |
|---|---|---|---|---|---|---|---|
| US 2010201958 | A1 | | 12-08-2010 | CN | 101784954 | A | 21-07-2010 |
| | | | | EP | 2181357 | A1 | 05-05-2010 |
| | | | | JP | 5579063 | B2 | 27-08-2014 |
| | | | | JP | 2011520240 | A | 14-07-2011 |
| | | | | KR | 20100067087 | A | 18-06-2010 |
| | | | | TW | 200919111 | A | 01-05-2009 |
| | | | | US | 2010201958 | A1 | 12-08-2010 |
| | | | | WO | 2009026970 | A1 | 05-03-2009 |
| US 2014307239 | A1 | | 16-10-2014 | EP | 2169464 | A1 | 31-03-2010 |
| | | | | JP | 5475785 | B2 | 16-04-2014 |
| | | | | JP | 2012504324 | A | 16-02-2012 |
| | | | | KR | 20110059800 | A | 03-06-2011 |
| | | | | TW | 201022854 | A | 16-06-2010 |
| | | | | US | 2011181850 | A1 | 28-07-2011 |
| | | | | US | 2014307239 | A1 | 16-10-2014 |
| | | | | WO | 2010034472 | A1 | 01-04-2010 |

EPO FORM P0459

For more details about this annex : see Official Journal of the European Patent Office, No. 12/82